# FASCICULE DE BREVET EUROPEEN

(11) **EP 0 888 704 B1**
(45) Date de publication et mention de la délivrance du brevet: **16.05.2001**
(21) Numéro de dépôt: 97914402.9
(22) Date de dépôt: 14.03.1997
(51) Int. Cl.: H05B 6/40, H05B 6/36

(54) **DISPOSITIF DE CHAUFFAGE PAR INDUCTION POUR LE TRAITEMENT SUPERFICIEL DE LA DENTURE D'UNE PIECE MECANIQUE**
INDUKTIONSHEIZGERÄT ZUR OBERFLÄCHENBEHANDLUNG VON ZAHNRÄDERN
INDUCTION HEATING DEVICE FOR SURFACE TREATING THE TEETH OF A MECHANICAL PART

(30) Priorité: 22.03.1996 FR 9603575
(43) Date de publication de la demande: 07.01.1999
(73) Titulaire: RENAULT, 92109 Boulogne-Billancourt (FR); Ensam Bordeaux, 33405 Talence (FR); SAET, 10040 Leini (IT)
(72) Inventeur: BONZANO, Giorgio, I-10040 Leini (IT); CRIQUI, Bernard, F-92150 Suresnes (FR); DE SOUSA DIAS, Maria, F-75014 Paris (FR); LONGEOT, Olivier, F-33405 Talence (FR)
(74) Mandataire: Fernandez, Francis Lionel
(86) Numéro de dépôt international: FR9700463
(87) Numéro de publication internationale: WO9736459

(56) Documents cités:
- WO-A-94/18808
- DE-C- 892 354
- DE-C- 966 784
- FR-A- 2 536 943
- US-A- 4 675 488
- US-A- 4 808 779
- ENGINEERS DIGEST, vol. 31, no. 12, Décembre 1970, LONDON GB, pages 57-68, XP002018131 D.C. EVANS: "Induction-hardening of gears."

## Description

L'invention concerne un dispositif de chauffage par induction pour le traitement superficiel de la denture d'une pièce mécanique telle qu'un pignon.

On a déjà cherché à obtenir sur la denture d'un pignon, un chauffage superficiel qui suive exactement le profil de la denture, de manière qu'il en soit de même de la couche trempée.

A cet effet, on dispose la pièce à chauffer dans une bobine d'induction parcourue par un courant alternatif.

On a toutefois constaté à une fréquence élevée (> 100 kHz) que les courants induits suivent au mieux le profil de la dent, mais que le flux thermique est convergent au sommet de la denture et divergent au fond de la denture.

Lorsque la fréquence du courant est moyenne (< 30 kHz), la densité du courant induit est faible au sommet de la dent et forte au fond de la dent.

Dans l'un et l'autre cas, la zone durcie de trempe ne peut donc suivre le profil de la denture d'autant plus que la profondeur du courant induit dépend aussi du module de la denture.

Une solution a été recherchée dans un chauffage en deux phases en ayant recours successivement à un chauffage à basse puis à haute fréquence.

On constate cependant des difficultés de réglage de la puissance de chauffage à basse et haute fréquence en utilisant un seul inducteur.

D'une manière plus générale, le profil de la denture doit être chauffé au-delà d'une température de transformation et doit être ensuite rapidement refroidi par trempage avec un liquide, en vue du durcissement. Les facteurs qui influencent l'épaisseur du traitement obtenue, sont la profondeur jusqu'à laquelle la denture est chauffée, la température jusqu'à laquelle la température de chauffage dépasse la température de transformation et la vitesse de refroidissement. Une bobine d'induction circulaire située à une faible distance de la surface ondulée de la denture, produit, généralement dans les régions des sommets de la denture un chauffage par induction plus important que dans les régions de transition entre les dents. La température et la profondeur du chauffage sont dès lors plus importantes dans les régions extérieures des dents. Les zones chauffées différemment sont ainsi refroidies à des vitesses différentes par le procédé de trempe.

La profondeur du traitement ainsi obtenu et appliqué à la denture d'un pignon n'est plus uniforme. On obtient alors un durcissement excessif au niveau des sommets des dents et un durcissement insuffisant dans la région des surfaces de liaison entre les dents. Pour réussir à durcir les dents d'une roue dentée par chauffage par induction, il est donc nécessaire de chauffer la pièce uniformément à une température choisie préalablement, directement avec le durcissement par trempe jusqu'à une profondeur contrôlée.

EP-A-0 546 884 concerne le traitement thermique des pièces ferromagnétiques à symétrie axiale et en particulier du problème de l'utilisation des convertisseurs statiques à thyristors ou rotatifs. DE-C-966 784 décrit un dispositif de chauffage par induction comportant des anneaux court circuit disposés latéralement de part et d'autre des dentures.

Un procédé de durcissement jusqu'à une profondeur uniforme sur la surface des dents de la roue dentée est exposé dans la publication US-A-4 675 488. Selon ce procédé, une roue dentée est disposée dans une bobine d'induction qui possède une hauteur ou une longueur axiale en correspondance avec celle de la roue dentée dans sa direction axiale. La bobine d'induction est alimentée brièvement par un courant alternatif, qui présente une fréquence de moins de 50 kHz pour préchauffer la roue dentée. La profondeur de chauffage obtenue par le chauffage par induction étant inversement proportionnelle à la racine carrée de la fréquence du courant dans la bobine d'induction, un préchauffage pénètre dans la roue dentée. Le corps de la dent est ainsi chauffé à une température inférieure à la température de transformation par durcissement par trempe du métal dont se compose la roue dentée. Une deuxième étage de préchauffage à une fréquence inférieure poursuit le chauffage du corps de la roue dentée et les flancs de la denture.

Suivant ce procédé les roues dentées sont d'abord introduites axialement dans une bobine de chauffage par induction à moyenne fréquence.

La roue dentée est ensuite déplacée axialement dans une deuxième bobine de chauffage par induction où elle subit un chauffage final par un courant plus élevé à haute fréquence.

Chaque bobine doit posséder une longueur axiale plus grande que la longueur axiale de la roue dentée pour permettre le chauffage global de celle-ci.

Ce procédé utilisant des spires annulaires droites, concentriques au pignon, permet un chauffage uniforme des dents de pignon à dentures droites, les courants induits circulant alors parallèlement aux bords des dentures. Mais, lorsque la denture à traiter est une denture hélicoïdale dont l'angle d'hélice est supérieur à 20° la circulation du courant induit dans la dent génère une chauffe dissymétrique des bords de la denture. Ceci est du au fait que le courant est induit orthogonalement aux conducteurs actifs de la bobine d'induction et circule parallèlement à l'axe de rotation de la roue dentée. Lorsque les génératrices de la denture ne sont plus parallèles les courants induits se répartissent de manière non uniforme dans celle-ci. Le processus de trempe engendre dans ce cas un gonflement du flanc de la dent et un risque d'écaillage au cours de l'engrènement de la denture.

L'invention a ainsi pour objet un dispositif de chauffage par induction remédiant à ces inconvénients.

Par ailleurs, un dispositif de commutation peut être prévu, qui enclenche en alternance les première et deuxième source de courant, tandis que la surface dentée peut-être déplacée dans un mouvement alternatif en direction axiale par rapport à la bobine.

La surface d'induction de la bobine peut être dirigée radialement vers l'intérieur ou l'extérieur pour traiter une denture intérieure d'une couronne planétaire ou la denture extérieure hélicoïdale d'un pignon.

L'invention est avantageusement applicable au chauffage final par induction avant le durcissement par trempe de la surface dentée cylindrique d'un pignon à denture hélicoïdale. L'invention s'applique également au chauffage par induction de pièces dentées allongées telles que des crémaillères de direction.

L'invention concerne plus particulièrement un dispositif de chauffage par induction pour le traitement superficiel de la denture d'une pièce mécanique sur laquelle chaque dent possède un sommet saillant et un fond de denture de liaison avec une dent adjacente, les génératrices de la denture de ladite pièce mécanique étant oblique par rapport à l'axe de rotation ou de translation de ladite pièce mécanique, dans lequel une bobine d'induction est espacée de la surface dentée et est alimentée par au moins une source de courant à haute fréquence pour le préchauffage.

Selon l'invention la bobine d'induction est constituée par un ensemble de segments conducteurs individuellement orthogonaux à la génératrice oblique de la denture, respectivement localisés au-dessus des sommets de denture et reliés entre eux par des segments de liaison.

Selon une autre caractéristique de la bobine, les segments conducteurs s'étendent au travers d'un élément de concentration du champ magnétique induit par lesdits segments conducteurs

Selon une autre caractéristique de la bobine, l'élément de concentration du champ magnétique s'étend au-dessus de la zone médiane de la denture.

Selon une mode particulier de réalisation du dispositif de chauffage par induction selon l'invention, les segments de liaison s'étendent au dessus d'un premier segment conducteur et réunissent un deuxième et un troisième segment conducteur.

Selon un autre mode de réalisation particulier du dispositif de chauffage par induction selon l'invention, les segments de liaison s'étendent au delà des bordures de la denture et son reliés entre eux par des segments de liaison éloignés de la denture.

Selon une caractéristique complémentaire du second mode de réalisation particulier, des anneaux court-circuit sont disposés latéralement et de part et d'autre des dentures.

D'autres caractéristiques et avantages de l'invention apparaîtront à la lecture d'un exemple de réalisation de celle-ci appliquée au traitement d'une denture hélicoïdale d'un pignon en référence au dessin annexé dans lequel :
- la figure 1 est une représentation schématique d'un équipement de chauffage à haute et moyenne fréquences.
- la figure 2 est une représentation en perspective d'un pignon à denture hélicoïdale et d'un détail de réalisation et de positionnement de la bobine d'induction d'un premier mode de réalisation du dispositif de chauffage par induction selon l'invention.
- la figure 3 est une vue développée d'une denture hélicoïdale et de la bobine d'induction du premier mode de réalisation.
- la figure 4a est une vue développée d'une denture hélicoïdale et de la bobine d'induction présentant un second mode de réalisation du dispositif de chauffage par induction selon l'invention.
- la figure 4b est une vue développée d'une denture hélicoïdale et de la bobine d'induction présentant une variante du second mode de réalisation du dispositif de chauffage par induction selon l'invention.
- la figure 5a est une représentation en perspective de la bobine d'induction représentée à la figure 4a.
- la figure 5b est une représentation en perspective de la bobine d'induction représentée à la figure 4b.
- les figures 6 et 7 sont des sections VI et VII caractéristiques de la bobine d'induction représentée à la figure 3.

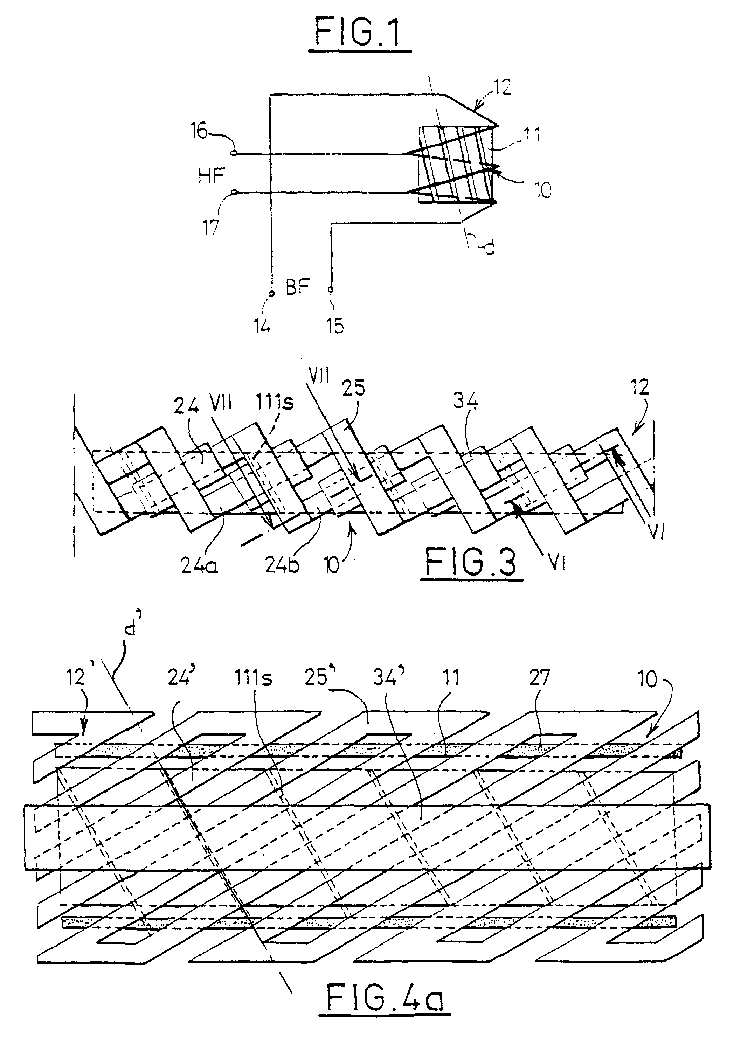

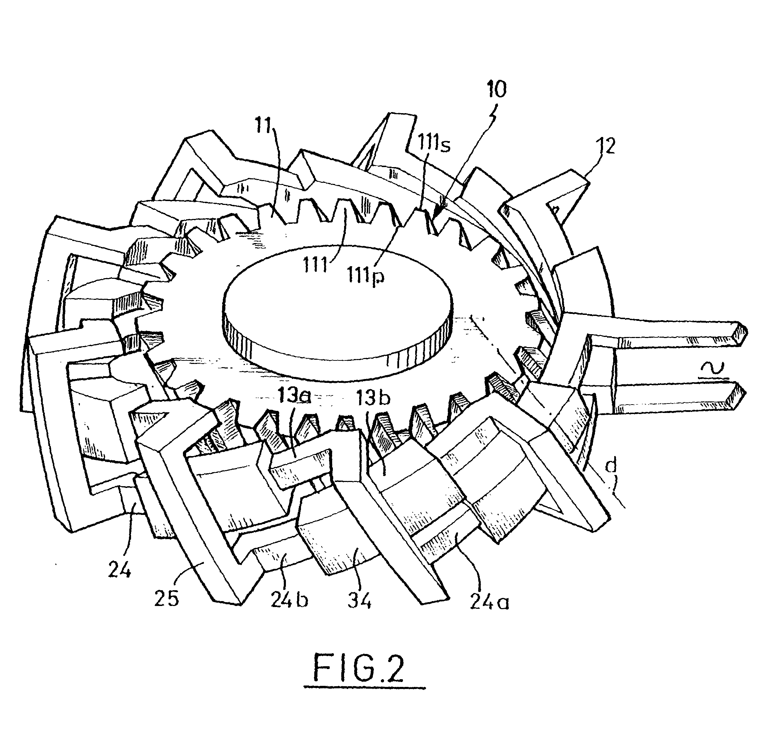

La figure 1 représente un pignon denté 10 dont la denture hélicoïdale il est définie par une génératrice (d). Une bobine d'induction 12 possède un nombre de spires 13 reliées à une source basse fréquence de manière à produire un flux magnétique ayant la valeur nécessaire pour obtenir un chauffage suffisant avec un courant relativement faible.

La bobine 12 possède des bornes 14, 15 entre lesquelles sont incluses 2 spires et sont connectées à la source basse fréquence.

La bobine 12 possède des prises 16, 17 connectées à une source haute fréquence. L'enroulement haute fréquence ne possède dans l'exemple décrit qu'une seule spire.

Les puissances à utiliser seront celles qui conviennent au matériau constitutif de la denture et dépendront de la résistivité dudit matériau.

Les fréquences les plus basses peuvent être de l'ordre de 3 kHz et les fréquences les plus élevées de l'ordre de 400 kHz.

Ainsi que cela est représenté à la figure 2 correspondant à un premier mode de réalisation du dispositif de chauffage par induction selon l'invention, le pignon 10 et sa denture hélicoïdale 11 sont disposés concentriquement à la bobine 12 constituée par deux spires 13a, 13b. La denture 11 est constituée par des dents élémentaires 111 montrant un sommet saillant 111s et un fond 111p de liaison à une dent adjacente.

La bobine 12 est radialement espacée et localisée à une distance voisine des sommets des dents 111s et est constituée par un ensemble de segments conducteurs 24 individuellement orthogonaux aux génératrices obliques (d) des dents respectives 111. Les segments 24 s'étendent de la sorte transversalement au-dessus des sommets 111s.

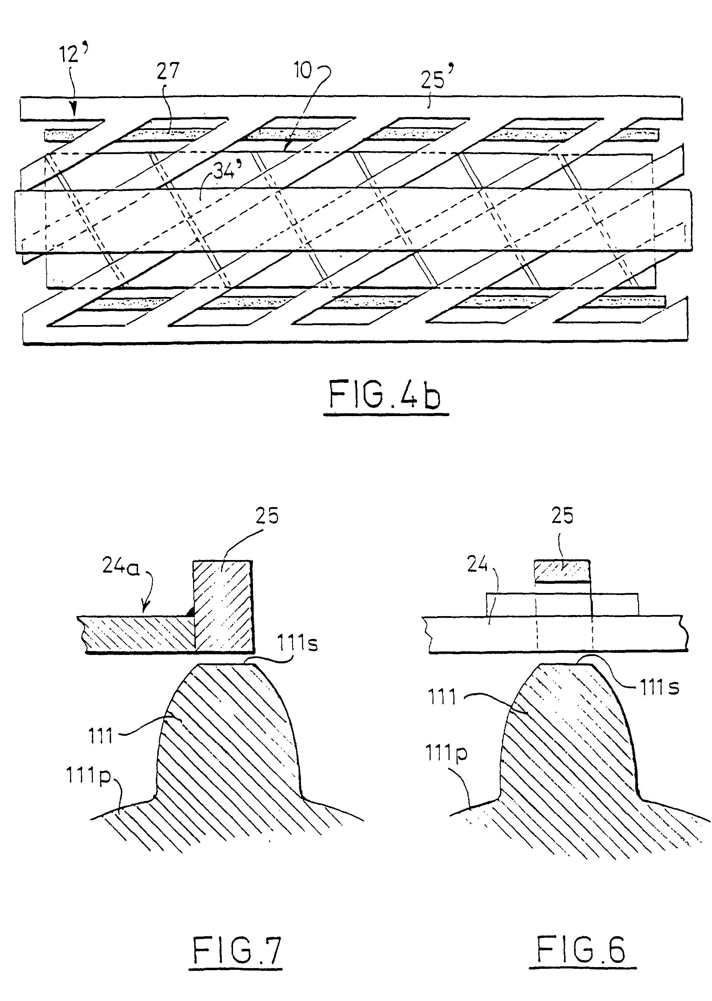

Ainsi que cela est montré aux figures 2, 6 et 7, deux segments conducteurs 24a, 24b sont connectés par leurs extrémités respectives à deux segments de liaison 25 distincts, un des deux segments de liaison 25 reliés aux segments conducteurs 24a et 24b s'étendant respectivement au dessus des segments conducteurs 24b et 24a. Cette disposition permet de relier électriquement les segments conducteurs 24 sans que le passage du courant à travers le segment de liaison 25 ne créé un fort courant induit dans la denture 11. En effet, ces segments de liaison 25 sont d'une part éloignés du sommet de la denture 111s ce qui réduit fortement l'intensité des courants induits par ceux-ci dans la denture il et d'autre part ils passent au dessus d'un segment conducteur 24 qui fait alors office de court-circuit de pompage des courants induits par les segments de liaison 25. Le courant circulant dans la denture 11 est alors principalement du courant induit par les segments conducteurs 24 qui sont orthogonaux à la génératrice de la denture 11 ce qui permet d'obtenir un chauffage du bord de la denture homogène.

Ainsi que cela est montré figure 3, les segments conducteurs 24 peuvent s'étendre au travers d'un élément de concentration 34 du champ magnétique induit de façon à renforcer le chauffage de la zone médiane de la denture 11. Un tel élément est constitué par des matériaux de haute perméabilité magnétique 34 qui renforcent les courants induits par les segments 24.

Le premier mode de réalisation du dispositif de chauffage par induction décrit ci-dessus est avantageusement appliquée aux engrenages de grande dimension dont la largeur de denture 1 est petite par rapport au diamètre D (D/1 > 4) et dont l'angle d'hélice de denture est modéré (de 20° à 40°).

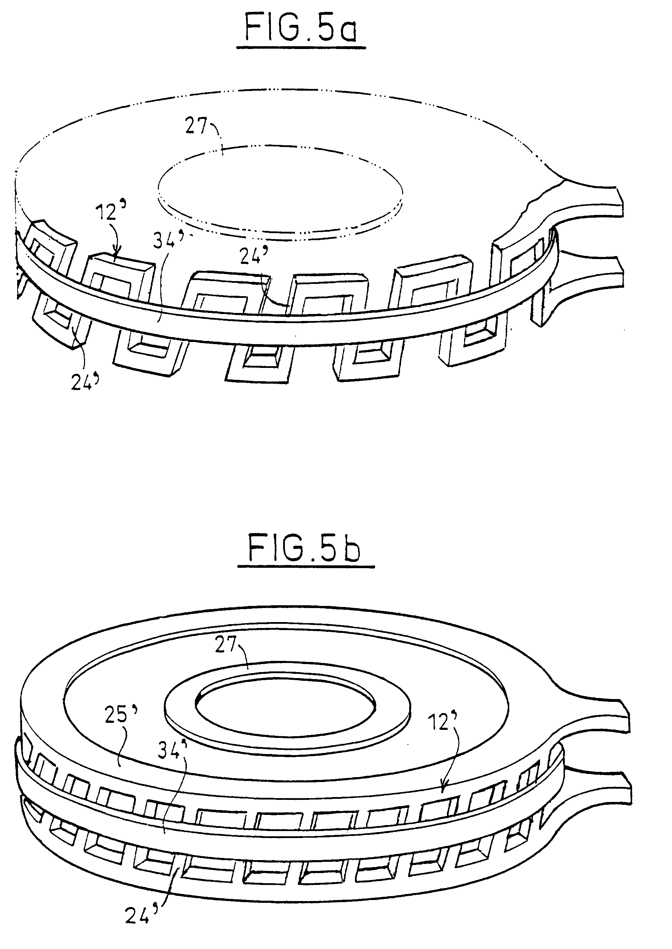

Les figures 4a et 5a correspondent à un second mode de réalisation du dispositif de chauffage par induction selon l'invention se caractérisant par une forte impédance de charge. Les figures 4b et 5b correspondent à une variante du second mode de réalisation se caractérisant par une faible impédance de charge. Les figures 4a et 4b représentent une vue développée du pignon 10 et de sa denture 11 entouré de la bobine d'induction 12'. La bobine d'induction 12' est constituée de segments conducteurs 24' orthogonaux à la génératrice d' de la denture et reliés entre eux par des segments de liaison 25'. Ces segments de liaison 25' sont éloignés du bords de la denture 11 et disposés parallèlement aux bords du pignon 10. Cette disposition permet en éloignant les segments de liaison 25' des bords de la denture 11 de réduire considérablement l'intensité des courants induits dans la denture 11 par le courant circulant dans les segments de liaison 25'. L'influence de ces segments de liaison 25' sur les courants induits dans la denture peut être encore réduite en rajoutant des anneaux court-circuit 27 disposés latéralement aux bordures de dentures ce qui permet une réduction du chauffage et donc de l'épaisseur de la trempe en bordure de dents. Cette réduction du chauffage de la bordure des dents peut être souhaitée dans le cas de dentures non chanfreinées.

Ainsi que cela est montré figures 4a à 5b, les segments conducteurs 24' peuvent s'étendre au travers d'un élément de concentration 34' du champ magnétique induit constitué par des matériaux de haute perméabilité magnétique. Dans ce cas l'élément 34' concentre le champ magnétique et le courant induit dans la zone médiane des dents et évite toute surchauffe du bord latéral de la denture.

Ce second mode de réalisation du dispositif de chauffage par induction est avantageusement applicable aux engrenages de petite dimension et à largeur de denture importante par rapport au diamètre D (D/1 < 5) et pour des angles d'hélice de denture importants (>30°).

Le dispositif de chauffage par induction selon l'invention permet donc une amélioration de la symétrie de chauffage des bords de dentures d'un pignon et il peut être avantageusement appliqué aux bobines d'induction alimentées successivement par des courants à deux fréquences, qui de par leurs puissances de chauffe importantes exacerbent les différences de circulation des courants induits, et dont l'application permet d'augmenter sensiblement la résistance à la fatigue des dentures.

## Revendications

1. Dispositif de chauffage par induction pour le traitement superficiel de la denture (11) d'une pièce mécanique, notamment une roue dentée ou une crémaillère, sur laquelle chaque dent (111) possède un sommet saillant (111s) et un fond de denture de liaison avec une dent adjacente, les génératrices de la denture de ladite pièce mécanique étant oblique par rapport à l'axe de rotation ou de translation de ladite pièce, dans lequel une bobine d'induction (12,12') est espacée des sommets des dents et est alimentée par au moins une source de courant à haute fréquence, caractérisé par le fait que la bobine est constituée par un ensemble de segments conducteurs (24,24'), individuellement orthogonaux à la génératrice oblique (d,d') de la denture, respectivement localisés au dessus des sommets de la denture et reliés entre eux par des segments de liaison (25,25').

2. Dispositif selon la revendication 1, caractérisé par le fait que les segments conducteurs (24,24') s'étendent au travers d'un élément de concentration (34,34') du champ magnétique induit par lesdits segments conducteurs (24,24').

3. Dispositif selon la revendication 2, caractérisé par le fait que l'élément de concentration (34,34') du champ magnétique s'étend au dessus de la zone médiane de la denture.

4. Dispositif selon l'une quelconque des revendications 1 à 3, caractérisé par le fait que les segments de liaison (25) s'étendent au dessus d'un premier segment conducteur (24b) et réunissent un deuxième et un troisième segment conducteur (24a) situés de part et d'autre du premier segment conducteur (24b).

5. Dispositif selon l'une quelconque des revendications 1 à 3, caractérisé par le fait que les segments conducteurs (24') s'étendent au delà des bordures de la denture (11) et sont reliés entre eux par des segments de liaison (25') éloignés de ladite denture (11).

6. Dispositif selon la revendication 5, caractérisé par le fait que des anneaux court-circuit (27) sont disposé latéralement et de part et d'autre des dentures (11).

## Claims

1. An induction heating device for the surface treatment of the teeth (11) of a mechanical component, in particular a toothed wheel or a rack, on which each tooth (111) has a projecting apex (111s) and a tooth base for connection with an adjacent tooth, the generatrices of the teeth of each mechanical component being oblique with respect to the axis of rotation or translation of the component, in which an induction coil (12, 12') is spaced from the apexes of the teeth and is supplied by at least one source of current at high frequency, characterised in that the coil is formed by an assembly of conductor segments (24, 24') individually at right angles to the oblique generatrix (d, d') of the teeth, respectively located above the apexes of the teeth and connected together by connection segments (25, 25').

2. A device as claimed in claim 1, characterised in that the conductor segments (24, 24') extend through a member (34, 34') for concentrating the magnetic field induced by these conductor segments (24, 24').

3. A device as claimed in claim 2, characterised in that the member (34, 34') for concentrating the magnetic field extends above the median zone of the teeth.

4. A device as claimed in any one of claims 1 to 3, characterised in that the connection segments (25) extend above a first conductor segment (24b) and join a second and a third conductor segment (24a) disposed on either side of the first conductor segment (24b).

5. A device as claimed in any one of claims 1 to 3, characterised in that the conductor segments (24') extend beyond the edges of the teeth (11) and are connected together by connection segments (25') remote from these teeth (11).

6. A device as claimed in claim 5, characterised in that short-circuit rings (27) are disposed laterally on both sides of the teeth (11).

## Patentansprüche

1. Induktionsheizvorrichtung zur Oberflächenbehandlung der Verzahnung (11) eines mechanischen Bauteils, insbesondere eines Zahnrades oder einer Zahnstange, wobei jeder Zahn (111) eine hervorspringende Spitze (111s) und einen Lückengrund als Verbindung mit einem Nachbarzahn aufweist, wobei die Erzeugenden der Verzahnung des mechanischen Bauteils schräg bezüglich der Rotationsachse oder der Verschiebeachse des Bauteils verlaufen und wobei eine Induktionsspule (12, 12') im Abstand zu den Zahnspitzen angeordnet ist und von wenigstens einer Hochfrequenz-Stromquelle gespeist wird, dadurch gekennzeichnet, dass die Spule aus einer Anordnung von leitenden Segmenten (24, 24') besteht, die jeweils orthogonal zur schrägen Erzeugenden (d, d') der Verzahnung sind, die oberhalb der Spitzen der Verzahnung angeordnet und die miteinander über Verbindungssegmente (25, 25') verbunden sind.

2. Vorrichtung nach Anspruch 1, dadurch gekennzeichnet, dass die leitenden Segmente (24, 24') quer zu je einem Konzentrationsbauteil (34, 34') für das von den leitenden Segmenten (24, 24') induzierte Magnetfeld angeordnet sind.

3. Vorrichtung nach Anspruch 2, dadurch gekennzeichnet, dass das Konzentrationsbauteil (34, 34') für das Magnetfeld oberhalb des Mittenbereichs der Verzahnung angeordnet ist.

4. Vorrichtung nach einem der Ansprüche 1 bis 3, dadurch gekennzeichnet, dass die Verbindungssegmente (25) oberhalb eines ersten leitenden Segmentes (24b) angeordnet sind und ein zweites und ein drittes leitendes Segment (24a), die beidseits des ersten leitenden Segmentes (24b) angeordnet sind, miteinander verbinden.

5. Vorrichtung nach einem der Ansprüche 1 bis 3, dadurch gekennzeichnet, dass sich die leitenden Segmente (24') bis über die Ränder der Verzahnung (11) hinaus erstrecken und untereinander über entfernt von der Verzahnung (11) angeordnete Verbindungssegmente (25') verbunden sind.

6. Vorrichtung nach Anspruch 4, dadurch gekennzeichnet, dass Kurzschlußringe (27) seitlich und beidseits der Verzahnung (11) angeordnet sind.
